Europäisches Patentamt

European Patent Office

Office européen des brevets

(19)

(11) Veröffentlichungsnummer: **0 226 987 B1**

# EUROPÄISCHE PATENTSCHRIFT

(12)

(45) Veröffentlichungstag der Patentschrift: **03.04.91**

(51) Int. Cl.⁵: **B07B 7/083**

(21) Anmeldenummer: **86117389.6**

(22) Anmeldetag: **13.12.86**

(54) Vorrichtung zum Klassieren von staubförmigen Schüttgütern.

(30) Priorität: **21.12.85 DE 3545691**

(43) Veröffentlichungstag der Anmeldung:
**01.07.87 Patentblatt 87/27**

(45) Bekanntmachung des Hinweises auf die
Patenterteilung:
**03.04.91 Patentblatt 91/14**

(84) Benannte Vertragsstaaten:
**AT CH DE ES FR GB IT LI**

(56) Entgegenhaltungen:
**EP-A- 0 023 320          EP-A- 0 152 278
DE-A- 2 053 323          DE-A- 2 556 382
US-A- 1 698 361          US-A- 3 372 805**

(73) Patentinhaber: **O & K Orenstein & Koppel Aktiengesellschaft**

**W-1000 Berlin(DE)**

(72) Erfinder: **Binder, Ulrich, Ing.grad.
Westkirchenerstrasse 155
W-4722 Ennigerloh(DE)**

Rank Xerox (UK) Business Services

## Beschreibung

Die Erfindung betrifft eine Vorrichtung zum Klassieren von staubförmigen Schüttgütern, insbesondere von gemahlenem Klinker, Kalkstein oder Zementrohmaterial, durch Luftsichtung, wobei das zu klassierende Material über einen Materialeinlauf der Deckplatte eines zylinderförmigen Rotors mit senkrecht stehenden Rotorschaufeln zugeführt und einem ringzylindrischen Sichtraum aufgegeben wird, der sich zwischen dem Rotor und einem diesen mit Abstand umgebenden, feststehenden Schaufelkranz erstreckt, durch den von einem außerhalb liegenden Ventilator Sichtluft etwa tangential angesaugt wird, so daß das im aufgegebenen Material enthaltene Feingut aufgrund der Saugwirkung, die sich aus der Differenz zwischen der Förderwirkung des Ventilators und der radial nach außen gerichteten Förderwirkung des Rotors ergibt, in das Innere des Rotors gefördert, durch ein Rohr senkrecht nach unten abgeführt und einer nachgeschalteten Abscheidevorrichtung zur Trennung von Feingut und Sichtluft zugeführt wird, wogegen das Grobgut im Sichtraum nach unten sinkt und über einen vom Feingut-Sichtluft-Abführrohr durchdrungenen Grobgutaustrag abgeführt wird.

Vorrichtungen der voranstehend beschriebenen Art zum Klassieren von staubförmigen Schüttgütern durch Sichtluft sind bekannt. (z.B. EP-A-0.023.320) Sie haben zwar den Vorteil einer guten Trennschärfe aufgrund des ringzylindrischen Sichtraumes, zur Bewältigung unterschiedlicher Schüttgut-Durchsatz-mengen benötigt man jedoch mehrere solcher Sichter unterschiedlicher Baugröße.

Der Erfindung liegt die Aufgabe zugrunde, die eingangs beschriebene bekannte Vorrichtung zwecks Konstruktionsvereinfachung weiterzubilden, um anstelle einer Mehrzahl von insgesamt - insbesondere im Durchmesser - unterschiedlichen Baugrößen zur Bewältigung der unterschiedlichen Durchsatzmengen eine einzige Bauform mit gleichbleibenden Basisteilen gleichen Durchmessers verwenden zu können.

Die Lösung dieser Aufgabenstellung durch die Erfindung ist dadurch gekennzeichnet, daß sowohl der Rotor als auch das den Schaufelkranz aufnehmende, zylindrische Gehäuseteil samt Schaufelkranz aus mehreren gleichartigen Axialabschnitten baukastenartig zusammengesetzt ist, wobei jedem Gehäuseabschnitt mindestens ein tangentialer Lufteintrittsstutzen zugeordnet ist.

Aufgrund dieser erfindungsgemäßen Ausbildung ist es möglich, die Klassiervorrichtung für staubförmige Schüttgüter unter Verwendung gleichartiger Einzelteile der jeweils benötigten Leistung anzupassen, indem die axiale Länge von Rotor und Gehäuseteil samt Schaufelkranz durch die Verwendung einer entsprechenden Anzahl gleichartiger Rotor- bzw. Schaufelkranzabschnitte variiert wird.

Bei einer bevorzugten Ausführungsform der Erfindung sind die Lufteintrittsstutzen übereinander angeordneter Gehäuseabschnitte entsprechend der Anzahl der Abschnitte gegeneinander in Umfangsrichtung versetzt angeordnet, wodurch eine Vergleichmäßigung der Luftzufuhr erzielt wird.

Mit der Erfindung wird weiterhin vorgeschlagen, die Leitschaufeln der Schaufelkränze jedes Gehäuseabschnitts senkrecht stehend anzuordnen, unter demselben spitzen Winkel zur Tangente auszurichten und mit in Strömungsrichtung zu nehmender Breite auszubilden. Hierdurch ergibt sich ein in Strömungsrichtung spiralförmig abnehmender Strömungsquerschnitt für die Sichtluftzufuhr und damit eine gleichmäßige Luftverteilung über den Umfang jedes Schaufelkranz-Abschnittes.

Gemäß einem weiteren Merkmal der Erfindung ist an jedem Gehäuseabschnitt mindestens ein Zyklon angeschlossen, auf den jeweils ein eigener Ventilator aufgesetzt ist. Hierdurch ergibt sich bei einer Erhöhung der Leistung der erfindungsgemäßen Vorrichtung durch Verwendung eines oder mehrerer zusätzlicher Axialabschnitte sowohl für den Rotor als auch für das Gehäuse automatisch die erforderliche Erhöhung der Ventilatorleistung, da den zusätzlichen Gehäuseabschnitten jeweils mindestens ein zusätzlicher Zyklon mit zugehörigem Ventilator zugeordnet ist. Auch für die Zyklone und Ventilatoren wird demgemäß eine einzige Bauform verwendet, die durch Mehrfachverwendung der jeweils gewünschten Leistung gerecht wird. Durch diese erfindungsgemäße Weiterbildung werden außerdem die Vorteile erzielt, daß Rohrleitungen und Rohrkrümmer eingespart werden und sich hierdurch infolge kleinerer und kürzerer Luftleitungen geringere Druckverluste ergeben. Schließlich schafft diese Ausbildung gegenüber der Verwendung eines einzigen Ventilators die Möglichkeit, die Luftmenge für jeden Axialabschnitt frei und unabhängig von anderen Axialabschnitten wählen zu können, wodurch der Sichtprozeß günstig beeinflußt werden kann.

Mit der Erfindung wird schließlich vorgeschlagen, die Rotorwelle aus zwei Basisteilen sowie einer der Zahl der zusätzlichen Axialabschnitte entsprechenden Anzahl von Zwischenstücken zusammenzusetzen. Außer einer einfachen Anpassung der Rotorwelle an den jeweiligen Bedarfsfall hat dies den Vorteil, daß keine der gesamten Wellenlänge entsprechende Ausbauhöhe oberhalb der Vorrichtung vorhanden sein muß.

Auf der Zeichnung sind vier Ausführungsbeispiele der erfindungsgemäßen Vorrichtung dargestellt, und zwar zeigen:

Fig. 1 einen senkrechten Schnitt durch ein erstes Ausführungsbeispiel,

Fig. 2 einen waagerechten Schnitt gemäß der Schnittlinie II - II in Fig. 1,

Fig. 3 eine Seitenansicht eines zweiten Ausführungsbeispiels mit vier nachgeschalteten Zyklonabscheidern zur Trennung des Feingutes von der Sichtluft,

Fig. 4 eine Draufsicht auf die Vorrichtung nach Fig.3,

Fig. 5 eine Seitenansicht einer dritten Ausführungsform,

Fig. 6 einen senkrechten Schnitt durch eine vierte Ausführungsform und

Fig. 7 eine Seitenansicht zu Fig.6.

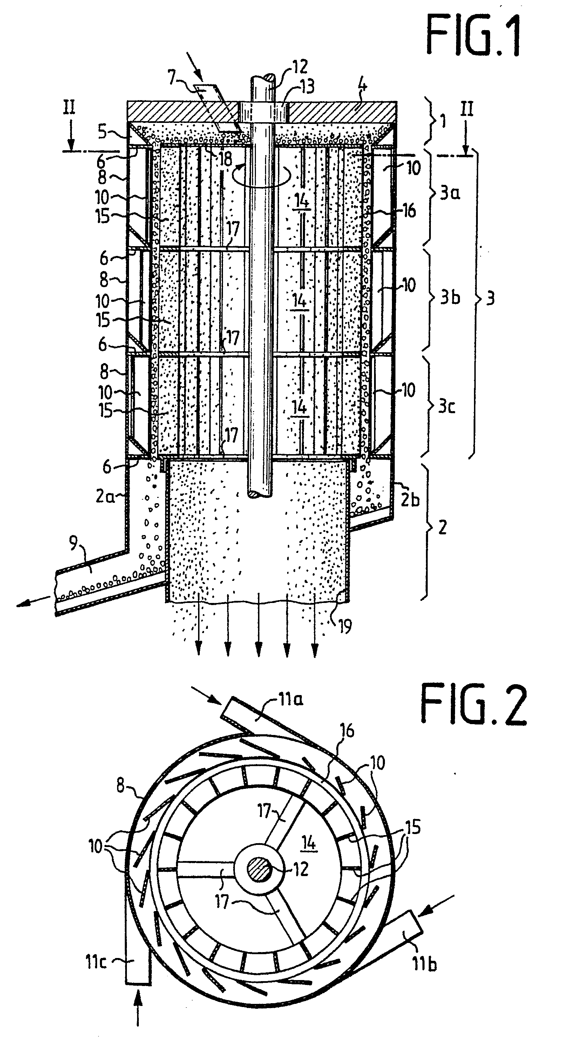

Die anhand eines senkrechten Schnittes in Fig.1 dargestellte Vorrichtung zum Klassieren von staubförmigen Schüttgütern durch Luftsichtung besteht aus einem Oberteil 1, einem Unterteil 2 und einem Gehäuseteil 3, das beim Ausführungsbeispiel nach Fig.1 und 2 aus drei gleichen Ab schnitten 3a, 3b und 3c zusammengesetzt ist.

Das Oberteil 1 umfaßt einen kreisförmigen Gehäusedeckel 4, an dem ein Gehäusering 5 befestigt ist. An der Unterseite trägt dieser Gehäusering 5 einen Ringflansch 6. Im Gehäusedeckel 4 ist ein Materialeinlaufrohr 7 für das zu klassierende Material angeordnet.

An den Ringflansch 6 des Oberteils 1 ist über einen entsprechenden Ringflansch 6 ein Gehäusering 8 angeschlossen, der den Abschnitt 3a des Gehäuseteils 3 bildet. Uber weitere Ringflansche 6 sind beim Ausführungsbeispiel nach Fig.1 zwei weitere Gehäuseringe 8 angeschlossen, die die Abschnitte 3b und 3c des Gehäuseteils 3 bilden und an deren unteren Ringflansch 6 das Unterteil 2 angeschlossen ist. Dieses Unterteil 2 besteht ebenfalls aus einem Gehäusering 2a und einem schräg verlaufenden Boden 2b, an den sich ein Grobgutaustragrohr 9 anschließt.

In jedem Gehäusering 8 ist ein feststehender Schaufelkranz aus Leitschaufeln 10 angeordnet. Diesem Schaufelkranz wird Sichtluft durch einen tangential angeordneten Lufteintrittsstutzen 11 zugeführt. Beim Ausführungsbeispiel nach den Figuren 1 und 2 ist jeweils ein derartiger Lufteintrittsstutzen 11 für jeden Gehäusering 8 vorgesehen. Selbstverständlich können auch mehrere tangential angeordnete Lufteintrittsstutzen 11 pro Gehäusering 8 vorgesehen sein. Wie die Fig.2 erkennen läßt, sind die Lufteintrittsstutzen 11a, 11b, 11c der übereinander angeordneten Gehäuseringe 8 in Umfangsrichtung entsprechend der Anzahl der Gehäuseringe 8 gegeneinander verdreht, so daß die insgesamt der Vorrichtung zugeführte Sichtluft gleichmäßig über deren Umfang verteilt wird. Der Lufteintrittsstutzen 11a gehört beispielsweise zum obersten Gehäusering 8, der Eintrittsstutzen 11b zum mittleren Gehäusering 8 und der Eintrittsstutzen 11c zum untersten Gehäusering 8.

Um die nur an einer Stelle dem Schaufelkranz jedes Gehäuseringes 8 zugeführte Sichtluft möglichst gleichmäßig über den Umfang des Schaufelkranzes zu verteilen, sind die senkrecht stehend angeordneten Leitschaufeln 10 unter demselben spitzen Winkel zur Tangente an den Gehäusering 8 ausgerichtet, jedoch mit in Strömungsrichtung der Sichtluft zunehmender Breite ausgebildet, wie es die Fig.2 gemäß Schnitt II - II zeigt. Hierdurch ergibt sich ein in strömungsrichtung spiralförmig abnehmender Strömungsquerschnitt für die Anströmung der Leitschaufeln 10 und damit eine gleichmäßige Luftverteilung über den gesamten Umfang des Schaufelkranzes.

Zumindest in dem Gehäusedeckel 4 ist eine Rotorwelle 12 mittels eines Lagers 13 drehbar gelagert, an der beim Ausführungsbeispiel nach Fig.1 drei Axialabschnitte 14a, 14b und 14c eines Rotors 14 unverdrehbar befestigt sind. Jeder Axialabschnitt 14a, 14b, 14c umfaßt einen ringförmigen Kranz aus Rotorschaufeln 15, die senkrecht und radial verlaufend ausgerichtet sind. Zwischen den drehend antreibbaren Rotorschaufeln l5 und den feststehend angeordneten Leitschaufeln 10 wird ein ringzylindrischer Sichtraum 16 gebildet, der sowohl im Längsschnitt nach Fig.1 als auch im Querschnitt nach Fig.2 zu erkennen ist.

Während bei den beiden unteren Axialabschnitten 14b, 14c die auf einem Ring angeordneten Rotorschaufeln 15 mit der Rotorwelle 12 über in Fig.2 gezeichnete Speichen 17 verbunden sind, weist der obere Axialabschnitt 14a lediglich im unteren Teil derartige Speichen 17 auf. Seine Oberseite wird durch eine geschlossene Deckplatte 18 gebildet. Diese Deckplatte 18 dient als Aufgabefläche für das durch das Materialeinlaufrohr 7 zugeführte Material.

Unterhalb des infolge der Speichen 17 offenen Rotors 14 aus den Axialabschnitten 14a, 14b, 14c ist im Unterteil 2 ein feststehendes Rohr 19 angeordnet, das den Boden 2b des Unterteils 2 durchdringt. Durch dieses Rohr 19 wird die mit Feingut beladene Sichtluft nach unten aus der voranstehend beschriebenen Vorrichtung abgeführt, wie durch die Pfeile in Fig.1 angedeutet wird.

Die Trennung des durch das Materialeinlaufrohr 7 zugeführten Materials in Fein- und Grobgut geschieht wie folgt:

Das zu klassierende Material gelangt zuerst auf die Deckplatte 18 des sich drehenden, aus den Axialabschnitten 14a, 14b, 14c gebildeten Rotors 14 und wird hierbei in radialer Richtung nach außen geschleudert, so daß es von oben her in den ringzylindrischen Sichtraum 16 eintritt. In diesem Sichtraum wird das zu klassierende Material einer Saugwirkung ausgesetzt, die sich aus der Differenz zwischen der Luftgeschwindigkeit der durch die feststehenden Leitschaufeln 10 zugeführten Sichtluft und der von den Rotorschaufeln 15 aufgrund der Rotation nach außen geförderten Luft ergibt. Da die Luftgeschwindigkeit der über die Lufteintrittsstutzen 11 dem Schaufelkranz aus Leitschaufeln 10 zugeführten Sichtluft größer ist als die Geschwindigkeit der durch die Rotordrehung von den Rotorschaufeln 15 bewegten Luft, ergibt sich insgesamt eine Luftströmung auf dem gesamten Umfang der aus Leitschaufeln 10 bestehenden Schaufelkränze quer zum ringzylindrischen Sichtraum 16 und durch den Kranz aus Rotor schaufeln 15 hindurch in das Innere des jeweiligen Axialabschnittes 14a, 14b bzw. 14c.

Diese Bewegung der Sichtluft nimmt entsprechend ihrer Geschwindigkeit einen Teil des im Sichtraum 16 nach unten fallenden Materials in das Innere der Axialabschnitte 14a, 14b, 14c mit. Das mitgenommene Material bildet den Feingutanteil, der von der jeweils eingestellten Luftgeschwindigkeit abhängt. Das nicht in das Innere der Axialabschnitte 14a, 14b, 14c mitgenommene Material fällt als Grohgut durch den Sichtraum 16 nach unten und gelangt in das Unterteil 2, aus dem es durch das Grobgutaustragrohr 9, beispielsweise mit Hilfe einer Luftförderrinne ausgetragen wird.

Da die mit Feingut beladene Sichtluft den aus mehreren Rotorabschnitten 14a, 14b, 14c gebildeten Rotor 14 von oben nach unten durchströmt und anschließend in das unterhalb des Rotors 14 angeordnete, senkrecht nach unten führende, feststehende Rohr 19 eintritt, ergibt sich kein zusätzlicher Energieaufwand für den Transport des Feingutes innerhalb der voranstehend beschriebenen Vorrichtung.

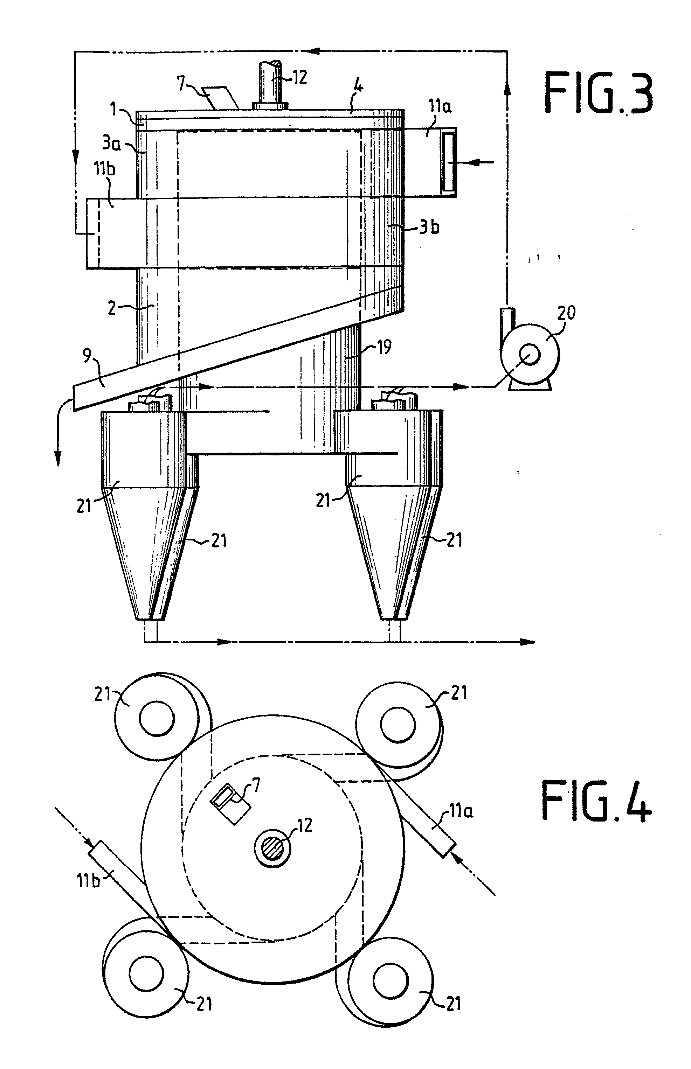

Das Ausführungsbeispiel gemäß den Figuren 3 und 4 läßt erkennen, daß die den aus feststehenden Leitschaufeln 10 gebildeten Schaufelkränzen zugeführte Sichtluft von einem außerhalb der Vorrichtung angeordneten Ventilator 20 erzeugt wird, der beim Ausführungsbeispiel die Sichtluft im geschlossenen Kreislauf umwälzt. Der als Radialgebläse ausgebildete Ventilator 20 drückt die Sichtluft über die Lufteintrittsstutzen 11 in die Gehäuseringe 8, von denen beim Ausführungsbeispiel nach Fig.3 lediglich zwei übereinander angeordnet sind. Die mit Feingut beladene Sichtluft gelangt aus dem feststehenden Rohr 19 gemäß dem Ausführungsbeispiel nach den Figuren 3 und 4 in insgesamt vier Zyklonabscheider 21, die gemäß Fig.4 über den Umfang gleichmäßig verteilt an das untere Ende des Rohres 19 angeschlossen sind. In diesen Zyklonabscheidern 21 erfolgt die Trennung der Sichtluft vom Feingut, das aus den unteren Enden der Zyklonabscheider 21 austritt. Die vom Feingut befreite Sichtluft wird an der Oberseite der Zyklonabscheider 21 vom Ventilator 20 angesaugt, so daß sich für die Sichtluft ein geschlossener Kreislauf ergibt.

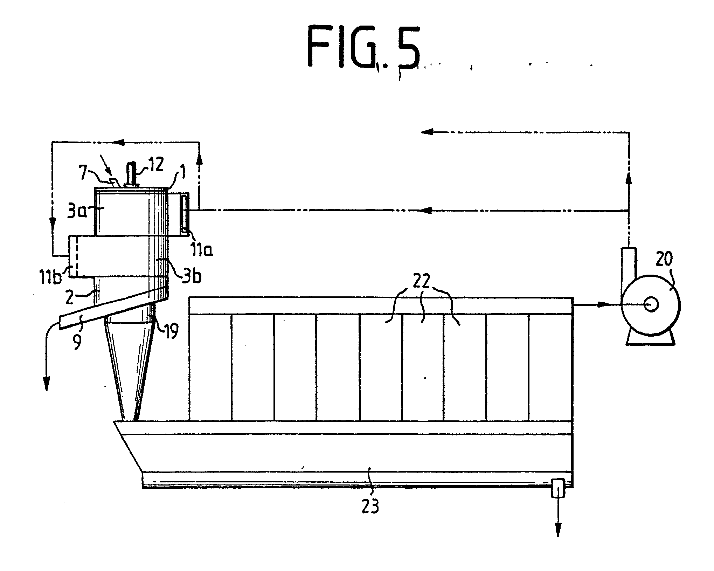

Auch beim dritten Ausführungsbeispiel nach Fig.5 ist der außerhalb der eigentlichen Sichtvorrichtung angeordnete Ventilator 20 zu erkennen, der die Sichtluft wiederum einem Sichter zuführt, der aus einem Oberteil 1, einem Unterteil 2 und einem Gehäuseteil 3 aus zwei Abschnitten 3a und 3b besteht. Bei dieser Ausführungsform erfolgt die Trennung der aus dem Rohr 19 nach unten austretenden, feingutbeladenen Sichtluft durch eine Mehrzahl von Filtern 22, die saugseitig an den Ventilator 20 angeschlossen sind und oberhalb einer Feingutaustragrinne 23 angeordnet sind.

Die vom jeweiligen Sichter zu klassierende Materialmenge läßt sich durch Wahl der entsprechenden Anzahl von Gehäuseringen 8 und Axialabschnitten 14a, 14b, 14c bestimmen, da durch eine Vergrößerung der Anzahl der Gehäuseringe 8 und Rotorabschnitte 14a, 14b, 14c die axiale Erstrekkung des ringzylindrischen Sichtraums 16 und damit dessen Sichtkapazität erhöht wird. Bei gleichbleibendem Durchmesser der Sichtvorrichtung und unter Verwendung identischer Bauteile läßt sich somit die Sichtkapazität der Vorrichtung auf einfache Weise dem Bedarf anpassen. Hierbei bleiben unabhängig von der Sichtleistung das Oberteil 1 und das Unterteil 2 sowie der obere Gehäusering 8 und der obere Axialabschnitt 14a gleich. Es ändert sich lediglich die Anzahl der wiederum gleichbleibenden unteren Gehäuseringe 8 und Rotorabschnitte 14b, 14c, so daß mit einem Minimum an unterschiedlichen Bauteilen Sichtvorrichtungen unterschiedlicher Kapazität baukastenartig erstellt werden können.

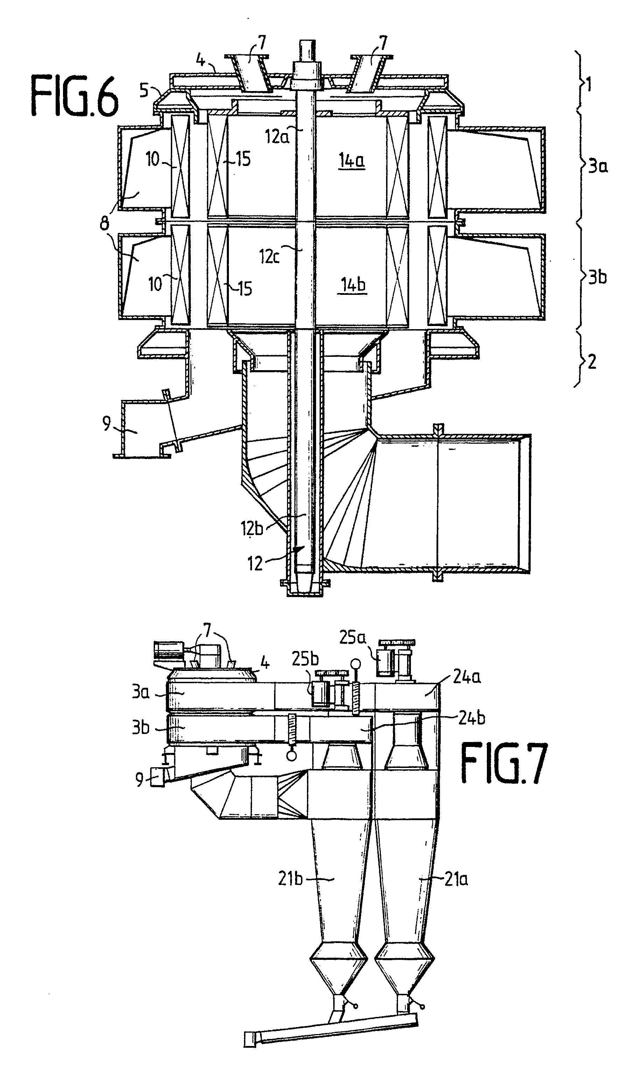

Auch beim vierten Ausführungsbeispiel nach den Figuren 6 und 7 ist die Vorrichtung zum Klassieren von staubförmigen Schüttgütern durch Luftsichtung baukastenartig zusammengesetzt. Wie die Schnittdarstellung nach Fig.6 zeigt, besteht bei dieser Ausführung das Sichtraumgehäuse aus einem Oberteil 1, einem Unterteil 2 und einem Gehäuseteil 3, das aus zwei gleichen Abschnitten 3a und 3b zusammengesetzt ist. Das Oberteil 1 umfaßt wiederum einen kreisförmigen Gehäusedeckel 4 mit einem Gehäusering 5 zum Anschluß an das Gehäuseteil 3. Der Gehäusedeckel 4 besitzt zwei Materialeinlaufrohre 7; das Unterteil 2 ist mit einem Grobgutaustragrohr 9 verbunden.

Jeder Abschnitt 3a und 3b des Gehäuseteils 3 besteht aus einem Gehäusering 8, in dem ein feststehender Schaufelkranz aus Leitschaufeln 10 angeordnet ist. Insoweit stimmt auch die vierte Ausführungsform mit den voranstehenden Ausführungen überein. Mit jedem Gehäusering 8 korrespondiert ein Abschnitt 14a bzw. 14b des Rotors 14, der einen ringförmigen Kranz aus Rotorschaufeln 15 aufweist.

Abweichend von den voranstehenden Ausführungsbeispielen ist bei der vierten Ausführungsform die Rotorwelle 12 aus zwei Basisteilen 12a und 12b und einem Zwischenstück 12c zusammengesetzt. Durch diese Aufteilung der Rotorwelle 12 in einzelne Abschnitte ist es möglich, auch die Rotorwelle 12 baukastenartig zusammenzusetzen, wobei jeweils eine der über eins hinausgehenden Zahl der Axialabschnitte des Rotors 14 entsprechende Anzahl von Zwischenstücken 12c verwendet wird. Es müssen demzufolge nicht unterschiedliche Rotorwellen 12 hergestellt und auf Lager gehalten werden, wenn Sichtvorrichtungen unterschiedlichen Leistungsbedarf montiert werden sollen. Außerdem entfällt die Notwendigkeit, oberhalb der Sichtvorrichtung einen so hohen Raum vorzusehen, daß die Rotorwelle 12 insgesamt nach oben ausgebaut werden kann. Die Zerlegungsmöglichkeit der Rotorwelle 12 in einzelne Abschnitte 12a, 12b und 12c verringert somit auch den Raumbedarf oberhalb des Sichtvorrichtung.

Ein weiterer Unterschied der vierten Ausführungsform gegenüber den voranstehend beschriebenen Ausführungen besteht darin, daß anstelle eines gemeinsamen Ventilators 20 einzelne Ventilatoren 24a, 24b verwendet werden, die gemäß Fig.7 jeweils auf einen Zyklon 21a, 21b aufgesetzt sind. Jeder dieser Zyklone 21a,21b ist an einen Gehäuseabschnitt 3a bzw. 3b des Gehäuseteils 3 angeschlossen, wie dies die Fig.7 zeigt. Auf diese Weise ändert sich die Menge der Sichtluft und die Anzahl der Zyklone 21a,21b mit der Anzahl der Abschnitte 3a,3b des Gehäuseteils 3, so daß auch insoweit eine baukastenartige Zusammensetzung der Gesamtvorrichtung erzielt wird. Wie Fig.7 erkennen läßt, wird jeder Ventilator 24a bzw. 24b von einem eigenen Motor 25a,25b angetrieben. Der Vorteil dieser Ausführungsform ist nicht nur die Möglichkeit einer baukastenartigen Zusammensetzung, er ergibt auch kurze und kleine Luftleitungen und verringert damit die Druckverluste. Außerdem schafft die Verwendung von jeweils einem Axialabschnitt der Sichtvorrichtung zugeordneten Ventilatoren 24a,24b die Möglichkeit, unterschiedliche Luftleistungen pro Sichtebene vorzusehen, falls dies für die Sichtleistung wünschenswert oder erforderlich sein sollte.

Abschließend soll festgehalten werden, daß mit den voranstehend beschriebenen Vorrichtungen nicht nur eine Sichtung des staubförmigen Schüttgutes erfolgen kann, sondern auch eine Kühlung oder Trocknung, indem die Sichtluft entweder vorher gekühlt oder zumindest teilweise durch kalte Frischluft ersetzt wird, oder aufgeheizt wird, beispielsweise durch Heißgaserzeuger oder durch Nutzung von warmer Abluft, wie sie beispielsweise in Form von Ofenabgasen oder Kühlerabluft meistens zur Verfügung steht.

## Ansprüche

1. Vorrichtung zum Klassieren von staubförmigen Schüttgütern, insbesondere von gemahlenem Klinker, Kalkstein oder Zementrohmaterial, durch Luftsichtung, wobei das zu klassierende Material über einen Materialeinlauf (7) der Deckplatte (4) eines zylinderförmigen Rotors (14) mit senkrecht stehenden Rotorschaufeln (15)zugeführt und einem ringzylindrischen Sichtraum (16) aufgegeben wird, der sich zwischen dem Rotor (14)und einem diesen mit Abstand umgebenden, feststehenden Schaufelkranz erstreckt, durch den von einem außerhalb liegenden Ventilator(20) Sichtluft etwa tangential angesaugt wird, so daß das im aufgegebenen Material enthaltene Feingut aufgrund der Saugwirkung, die sich aus der Differenz zwischen der Förderwirkung des Ventilators (20) und der radial nach außen gerichteten Förderwirkung des Rotors (14) ergibt, in das Innere des Rotors (14) gefördert, durch ein Rohr (19) senkrecht nach unten abgeführt und einer nachgeschalteten Abscheidevorrichtung (21,22) zur Trennung von Feingut und Sichtluft zugeführt wird, wogegen das Grobgut im Sichtraum (16) nach unten sinkt und über einen vom Feingut-Sichtluft-Abführrohr (19) durchdrungenen Grobgutaustrag (9) abgeführt wird, **dadurch gekennzeichnet,** daß sowohl der Rotor (14) als auch das den Schaufelkranz aufnehmende, zylindrische Gehäuseteil (3) samt Schaufelkranz aus mehreren gleichartigen Axialabschnitten (14a, 14b,14c bzw. 3a,3b,3c) baukastenartig zusammengesetzt ist, wobei jedem Gehäuseabschnitt (3a,3b,3c) mindestens ein tangentialer Lufteintrittsstutzen (11a,11b,11c) zugeordnet ist.

2. Vorrichtung nach Anspruch 1, dadurch gekennzeichnet, daß die Lufteintrittsstutzen (11a,11b,11c) übereinander angeordneter Gehäuseabschnitte (3a,3b,3c) entsprechend der Anzahl der Abschnitte gegeneinander in Umfangsrichtung versetzt angeordnet sind.

3. Vorrichtung nach Anspruch 1 oder 2, dadurch gekennzeichnet, daß die Leitschaufeln (10) der Schaufelkränze jedes Gehäuseabschnitts (3a,3b,3c) senkrecht stehend angeordnet, unter dem selben spitzen Winkel zur Tangente ausgerichtet und mit in Strömungsrichtung zunehmender Breite ausgebildet sind.

4. Vorrichtung nach Anspruch 1, dadurch gekennzeichnet, daß an jedem Gehäuseabschnitt (3a,3b,) mindestens ein Zyklon (21a,21b) angeschlossen ist, auf den jeweils ein eigener Ventilator (24a,24b) aufgesetzt ist.

5. Vorrichtung nach Anspruch 1, dadurch gekennzeichnet, daß die Rotorwelle (12) aus zwei Basisteilen (12a und 12b) sowie einer der Zahl der zusätzlichen Axialabschnitte (14b,14c) entsprechenden Anzahl von Zwischenstücken (12c) zusammengesetzt ist.

## Claims

1. Apparatus for grading powdery bulk goods, especially ground clinker, limestone or cement raw material, by means of air separation, in which the material to be graded is fed by way of a material infeed (7) to the cover plate (4) of a cylindrical rotor (14) with vertical rotor blades (15) and delivered to an annular cylindrical separation chamber (16) which extends between the rotor (14) and a stationary blade ring which surrounds the latter at a distance and through which separating air is drawn in, approximately tangentially, by a fan (20) situated outside, so that fine material contained in the material fed in, by reason of the suction effect resulting from the difference between the conveying effect of the fan (20) and the conveying effect of the rotor (14), directed radially outwards, is conveyed into the inside of the rotor (14), led off vertically downwards through a pipe (19), and fed to a separating device (21, 22), connected downstream, for the separation of fine material and separating air, whereas the coarse material drops downwards in the separation chamber (16) and is led off by a coarse material discharge means (9) penetrated by the discharge pipe (19) for fine material and separating air, characterised in that both the rotor (14) and the cylindrical housing part (3) accommodating the blade ring, together with the blade ring, are built up from several axial sections (14a, 14b, 14c and 3a, 3b, 3c) of the same kind on a modular basis, at least one tangential air inlet connection piece (11a, 11b, 11c) being associated with each housing section (3a, 3b, 3c).

2. Apparatus according to Claim 1, characterised in that the air inlet connection pieces (11a, 11b, 11c) of housing sections (3a,3b, 3c) arranged one above the other are offset with respect to one another in a peripheral direction according to the number of sections.

3. Apparatus according to Claim 1 or 2, characterised in that the guide blades (10) of the blade rings of each housing section (3a, 3b, 3c) are arranged vertically, are orientated at the same acute angle to the tangent, and have a width increasing in the direction of flow.

4. Apparatus according to Claim 1, characterised in that connected to each housing section (3a, 3b) there is at least one cyclone (21a, 21b) onto which a separate fan (24a, 24b) is fitted in each case.

5. Apparatus according to Claim 1, characterised in that the rotor shaft (12) is built up of two basic parts (12a and 12b) and also a number of intermediate members (12c) corresponding to the number of additional axial sections (14b, 14c).

## Revendications

1. Machine pour classer des produits en vrac pulvérulents, en particulier des clinkers, calcaires ou matières brutes de ciment, broyés, par classement pneumatique, la matière à classer étant acheminée par une entrée de matière (7) à la plaque de couvercle (4) d'un rotor cylindrique (14) possédant des aubes de rotor verticales (15) et étant débitée dans une chambre de classement cylindrique annulaire (16) qui s'étend entre le rotor (14) et une couronne d'aubes fixes, qui entoure ce rotor à un certain écartement, chambre à travers laquelle de l'air est aspiré à peu près tangentiellement par un ventilateur (20) situé à l'extérieur, de sorte que, par suite de l'effet d'aspiration qui résulte de la différence entre l'effet d'entraînement du ventilateur (20) et l'effet d'entraînement du rotor (14), qui est dirigé radialement vers l'extérieur, le produit fin contenu dans la matière chargée est refoulé dans le volume intérieur du rotor (14), puis évacué verticalement vers le bas par un tube (19) et acheminé à un dispositif séparateur (21, 22) placé en aval qui sert à séparer le produit fin et l'air de classement, tandis que le produit grossier tombe de haut en bas dans la chambre de classement (16) et est évacué par l'intermédiaire d'une sortie de produit grossier (9) qui est traversée par le tube d'évacuation du produit fin et de l'air de classement, caractérisée en ce que
le rotor (14) et la partie corps cylindrique (3), qui reçoit la couronne d'aubes, y compris la couronne d'aubes, sont composées de plusieurs tronçons axiaux identiques (14a , 14b , 14c et 3a , 3b , 3c ), selon une construction par éléments, au moins une tubulure d'entrée d'air tangentielle (11a , 11b , 11c ) étant associée à chaque tronçon (3a , 3b , 3c ) du corps.

2. Machine selon la revendication 1, caractérisée en ce que les tubulures d'entrée d'air (11a , 11b , 11c ) des tronçons (3a , 3b , 3c ) de corps disposés les uns au-dessus des autres sont décalées dans la direction circonférentielle les unes par rapport aux autres d'un angle qui varie avec le nombre des tronçons ce qui assure la régularisation de l'arrivée d'air.

3. Machine selon la revendication 1 ou la revendication 2, caractérisée en ce que les aubes directrices (10) des couronnes d'aubes de chaque tronçon (3a 3b , 3c ) de corps sont disposées debout verticalement, orientées en formant le même angle aigu avec la tangente, et réalisées avec une largeur croissante dans la direction de l'écoulement.

4. Machine selon la revendication 1, caractérisée en ce qu'à chaque tronçon (3a , 3b ,) du corps est raccordé au moins un cyclone (21a , 21b ) sur lequel est monté son propre ventilateur (24a , 24b ).

5. Machine selon la revendication 1, caractérisée en ce que l'arbre (12) du rotor est composé de deux parties de base (12a et 12b ) ainsi que d'un nombre de tronçons intermédiaires (12c ) qui correspond au nombre des tronçons axiaux supplémentaires (14b , 14c ).

FIG.1

FIG.2

EP 0 226 987 B1

FIG.3

FIG.4

# FIG. 5

FIG.6

FIG.7